# FASCICULE DE BREVET EUROPEEN

(11) **EP 0 796 829 B1**
(45) Date de publication et mention de la délivrance du brevet: **02.01.2004**
(21) Numéro de dépôt: 97450003.5
(22) Date de dépôt: 17.03.1997
(51) Int. Cl.: C04B 35/83, C04B 35/80, B32B 18/00

(54) **Procédé de fabrication d'un panneau du type nid d'abeille en composite carbone/carbone ou carbone/céramique et structures constituées à partir d'un tel panneau**
Verfahren zur Herstellung einer Platte mit Honigwabenstruktur aus einem Kohlenstoff/Kohlenstoff- oder Kohlenstoff/Keramik-Verbundkörper sowie Strukturen die eine derartige Platte enthalten
Process for the manufacture of a honeycomb panel made of a carbon/carbon or carbon/ceramic composite and structures fabricated with such a panel

(30) Priorité: 19.03.1996 FR 9603650
(43) Date de publication de la demande: 24.09.1997
(73) Titulaire: EUROPEAN AERONAUTIC DEFENCE AND SPACE COMPANY - EADS FRANCE, 75016 Paris (FR)
(72) Inventeur: Rousseau, Gérard, 33160 Saint Aubin de Medoc (FR); Pasquet, Jean Christophe, 33200 Bordeaux (FR)
(74) Mandataire: Thébault, Jean-Louis

(56) Documents cités:
- EP-A- 0 051 535
- EP-A- 0 477 505
- EP-A- 0 611 741
- GB-A- 2 197 618
- US-A- 3 174 895
- US-A- 4 617 072
- US-A- 4 824 711

## Description

La présente invention se rapporte aux matériaux composites thermo-structuraux et plus particulièrement à des structures formées à l'aide d'un panneau sandwich du type nid d'abeille en matériau composite carbone/carbone ou carbone/céramique.

L'invention vise plus spécialement, bien que non exclusivement, la réalisation de structures destinées à des applications spatiales et devant satisfaire à un certain nombre de contraintes sévères telles que rigidité élevée, très grandes stabilité dimensionnelle et légèreté, absence de dilatation différentielle.

En outre, certaines applications, notamment optiques, requièrent un environnement le plus pur possible impliquant un matériau qui ne dégaze pas lorsqu'il est soumis au vide spatial.

Les techniques ordinaires de fabrication de panneaux du type d'abeille en matériau composite carbone/résine ne sont pas susceptibles de donner des structures répondant aux critères sévères rappelés ci-dessus.

En effet, suivant l'une de ces techniques, on réalise deux peaux constituées par exemple de plusieurs plis de tissu de fibres de carbone pré-imprégnées d'une résine époxy, on place les peaux de part et d'autre d'un nid d'abeille, par exemple en tissu de carbone imprégné d'une résine époxy, avec interposition d'un film de résine adhésive, puis on soumet l'assemblage à une polymérisation assurant à la fois le durcissement de la matrice des peaux et le collage de ces dernières sur l'âme en nid d'abeille.

Outre la faible tenue en température (150°C) d'un tel panneau, la présence de la résine, simplement polymérisée ou réticulée, est susceptible, du fait de son aptitude à la reprise d'humidité, d'entraîner des déformations dudit panneau et également de relarguer en ambiance spatiale des éléments gazeux.

De plus, une telle résine veillit mal et la résistance de la structure ainsi formée diminue avec le temps.

Bref, des structures réalisées à partir de tels panneaux ne donnent pas satisfaction quand on a besoin de structures ultra-stables et non polluantes optiquement parlant.

La présente invention vise précisément à proposer une technique de fabrication d'un matériau composite thermostructural du type sandwich en nid d'abeille tout carbone ou carbone/céramique, apte à satisfaire les contraintes très sévères imposées pour la réalisation de structures ultra-stables destinées à des applications spatiales.

A cet effet, l'invention a pour objet un procédé de fabrication d'un panneau du type nid d'abeille en composite carbone/carbone ou carbone/céramique, comprenant un support en nid d'abeille ou analogue constitué d'un renfort de fibres de carbone densifié par une matrice en carbone ou céramique, flanqué de part et/ou d'autre d'une peau constituée d'un renfort en fibres de carbone densifié par une matrice en carbone ou céramique, caractérisé en ce qu'il consiste :
- à réaliser, d'une part, le support en nid d'abeille, par pyrolyse d'une structure nid d'abeille en tissu de carbone pré-imprégné d'une résine thermo-durcissable,
- à réaliser, d'autre part, la ou chaque peau, par drapage de tissus de carbone pré-imprégnés d'une résine thermodurcissable,

Par ailleurs, par EP-A-0 611 741, on connaît un procédé de fabrication d'une pièce comprenant au moins deux parties ou préformes à l'état non densifié ou non complètement densifié, par assemblage des préformes par liaison entre des surfaces respectives en contact des préformes au moyen de fibrilles qui font saillie perpendiculairement à la surface des préformes et sont formées par des extrémités de fibres déplacées par aiguilletage puis co-densification des préformes assemblées. Ce procédé ne permet pas cependant de réaliser des panneaux présentant des qualités exceptionnelles de rigidité, de légèreté et de stabilité dimensionnelle.

Par EP-A-0 051 535, on connaît un procédé de collage de pièces en matériaux notamment carbonés et céramiques pour former une structure composite, mettant en oeuvre une thermolyse de la colle puis une densification par dépôt chimique en phase vapeur.

Par US-A-4 617 072, on connaît un procédé de fabrication d'une pièce en matériau composite dans lequel au moins deux préformes déformables sont collées, formées et pyrolysées.

En bref, les diverses techniques rappelées ci-dessus ne donnent pas satisfaction quand on a besoin de structures ultra-stables et non-polluantes optiquement parlant.
- à assembler le support et la ou les peaux, en interposant entre peau et support un tissu de carbone pré-imprégné d'une résine thermodurcissable,
- à polymériser avec compactage l'assemblage ainsi obtenu,
- puis à pyrolyser ledit assemblage,
- et, enfin, à effectuer une infiltration chimique en phase vapeur à des fins de densification et de renforcement du collage de l'assemblage.

Suivant un mode de mise en oeuvre préféré, les cellules du support en nid d'abeille sont formées à partir d'un tissu dont la chaîne et la trame sont orientées à 45° de l'axe des cellules, la résine d'imprégnation étant une résine phénolique ou polyimide.

La ou chaque peau est, de préférence, formée d'un empilement de plis croisés à 45° en respectant une symétrie miroir.

Avantageusement, le tissu de carbone interposé entre peau et support en vue d'assurer le collage est imprégné de la même résine que le support nid d'abeille mais avec un taux d'imprégnation plus élevé, ledit tissu étant appliqué sur la peau avant mise en place de cette dernière sur ledit support.

Les deux opérations de pyrolyse, d'une part du support nid d'abeille, et, d'autre part, du sandwich assemblé, s'effectuent dans les conditions habituelles, par exemple à une température de l'ordre de 900°C.

La polymérisation des résines du sandwich assemblé s'effectue également dans les conditions habituelles, à une température légèrement inférieure à 200°C et de préférence en associant une mise sous vide du sandwich à l'application d'une pression externe.

Enfin, l'infiltration chimique en phase vapeur s'effectue également à la manière connue, par exemple, en vue d'obtenir un ensemble tout carbone, avec du méthane, vers 1000°C, sous une pression de 10³ Pa et pendant une dizaine de jours.

Le panneau ainsi obtenu constitue une structure "tout carbone" présentant de remarquables qualités de rigidité, légèreté, stabilité dimensionnelle.

A partir d'un tel sandwich, on peut réaliser notamment des structures destinées à des applications spatiales, telles que des viroles ou des structures supports cylindriques ou autres, pouvant atteindre des dimensions importantes, par exemple une structure de télescope spatial pour laquelle, entre autres, la plus grande stabilité dimensionnelle et un environnement optique sans pollution sont des impératifs majeurs.

Suivant une variante permettant d'obtenir une structure composite carbone/céramique et plus particulièrement une structure à matrice de carbure de silicium SiC, on effectue l'infiltration en phase vapeur à l'aide d'un précurseur approprié, tel que le trichlorométhylsilane, en sorte d'obtenir une matrice SiC dans le support en nid d'abeille et dans les peaux.

D'autres caractéristiques et avantages ressortiront de la description qui va suivre d'un mode de mise en oeuvre du procédé de l'invention, description donnée à titre d'exemple uniquement et en regard du dessin annexé sur lequel :
- Figure 1 est un schéma illustrant la phase d'assemblage d'un sandwich conformément à l'invention ;
- Figure 2 illustre la mise sous vessie du sandwich en vue de sa polymérisation.

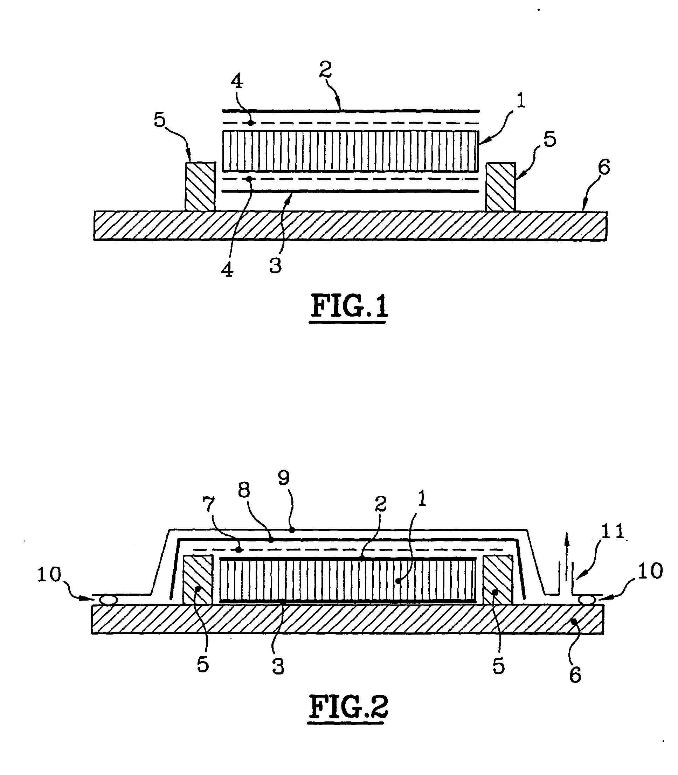

Sur la figure 1, on a représenté schématiquement, vu en éclaté et sur la tranche, un sandwich rectangulaire comprenant une âme 1 en nid d'abeille, en 2 et 3 respectivement une peau supérieure et une peau inférieure, en 4 un tissu pré-imprégné interposé entre chaque peau 2, 3 et l'âme centrale 1. En 5, sont représentées des cales latérales, placées sur les quatre côtés du sandwich, l'ensemble étant supporté par une plaque métallique 6 recouverte d'un tissu en Teflon non poreux.

Le nid d'abeille 1 est par exemple l'un de ceux commercialisés par la Société HEXCEL, constitué d'un tissu de carbone rigidifié par des résines thermodurcissables telles que des résines phénoliques, polyimides, furaniques ou polycyanates.

Un tissu qui convient bien est un tissu à armure taffetas équilibrée de torons de 1000 filaments du matériau dénommé "Thornel 300", la chaîne et la trame de ce tissu étant disposées à 45° de l'axe des cellules ou alvéoles du nid d'abeille.

Les cellules ont des parois dont la moitié est constituée d'une couche de tissu simple et non comprimé.

La masse spécifique du nid d'abeille, qui dépend du grammage du tissu utilisé pour sa fabrication et de la taille des cellules, varie entre environ 0,032 g/cm³ et environ 0,32 g/cm³.

Le nid d'abeille 1 est, indépendamment des peaux, pyrolysé à la manière connue, par exemple à une température de l'ordre de 900°C.

Après pyrolyse, il a été constaté que l'âme 1, déjà poreuse au départ du fait de la minceur des parois des cellules, avait encore accru sa porosité du fait du retrait de pyrolyse du polymère dans les torons, l'intérêt de cette porosité étant signalé plus loin.

Les peaux 2 et 3 sont réalisées par drapage séparément avant d'être collées au nid d'abeille 1.

A cet effet, on utilisera pour chaque peau, quatre plis empilés, d'un tissu de carbone pré-imprégné d'une résine phénolique par exemple, les chaînes de deux plis consécutifs étant croisées à 45° en respectant une symétrie miroir qui permet d'obtenir des peaux ne se déformant pas lors des opérations de polymérisation et de pyrolyse.

On réalise ensuite l'assemblage des éléments du sandwich comme illustré par la figure 1.

Il est à noter à ce propos que l'étape préalable de pyrolyse de l'âme 1 seule n'existe pas si l'on dispose d'emblée d'une âme 1 déjà pyrolysée.

Un revêtement de colle est interposé entre chaque peau 2, 3 et l'âme 1, et est constitué, de préférence, par un tissu 4 de carbone pré-imprégné d'une résine phénolique, appliqué sur l'une des faces des peaux avant que ces dernières ne soient rapportées contre l'âme 1.

Le tissu 4 est par exemple de même type que celui utilisé pour les peaux 2, 3, avec toutefois, de préférence, un taux d'imprégnation de résine sensiblement supérieur à celui de la résine desdites peaux.

Les peaux 2, 3 ainsi munies de leur tissu 4 sont ensuite mises en contact avec l'âme 1 (figure 2). Les cales périphériques 5 sont mises en place, l'ensemble 1 à 4 est recouvert, à la manière connue, d'un tissu poreux 7, d'un tissu de drainage 8 et enfin d'une vessie 9, étanchée par un mastic en 10 à sa périphérie et munie d'une valve 11 la reliant à une source de vide (non représentée).

L'ensemble de la figure 2 est alors placé en autoclave pour y effectuer une polymérisation de la résine des peaux 2, 3 et des tissus 4, dans les conditions habituelles de température (inférieure à 200°C).

La pression exercée sur le sandwich résulte à la fois du vide fait à l'intérieur de la vessie 9 et d'une pression externe réalisée dans l'autoclave par exemple de l'ordre de 1 à 2 bars par rapport à l'extérieur de l'autoclave.

L'observation micrographique de la jonction âme-peau a montré que la tranche des parois du nid d'abeille 1 écrase fortement le tissu de collage 4, qui se distend au contraire entre lesdites parois en direction du centre du nid d'abeille. Au droit de chaque ligne de contact entre tissu 4 et extrémité des parois du nid d'abeille, ledit tissu 4 épouse sur quelques dixièmes de millimètres les parois de chaque côté, ce qui augmente la surface de collage par un phénomène analogue à la formation d'un ménisque de colle remontant le long des parois du nid d'abeille dans les collages conventionnels à l'aide d'un film adhésif.

Après polymérisation, le sandwich, débarrassé de sa vessie 9, est replacé en autoclave et soumis à une pyrolyse des résines des peaux 2, 3 et des tissus 4, à la manière connue, par exemple sous gaz neutre et à 900°C.

Cette pyrolyse transforme la résine phénolique en carbone vitreux et s'accompagne d'un retrait important de la matrice en entraînant une porosité supplémentaire par exemple de l'ordre de 25 % pour un taux volumique de fibre du composite de l'ordre de 60 %.

Le retrait de la matrice étant empêché par les fibres, ladite matrice se microfissure sans toutefois entraîner de déformation du composite et donc sans perturber les positions relatives des peaux 2, 3 et de l'âme 1 qui demeurent collées entre elles.

Enfin, pour consolider le collage et densifier le sandwich, on effectue dans un four sous vide une infiltration chimique en phase vapeur, dans les conditions habituelles, par exemple à l'aide de méthane comme précurseur, à une température de l'ordre de 1000°C, sous une pression de 10³ Pa et pendant une durée de 250 heures.

Une telle infiltration colmate notamment les micro-fissures et les micro-porosités des peaux (2 à 4) et de l'âme du nid d'abeille et consolide considérablement les zones de jonction entre l'âme 1 et les tissus 4.

Le caractère très poreux du sandwich favorise bien entendu une telle infiltration qui s'effectue en profondeur et de manière bien homogène.

Il est à noter qu'une telle densification ne réduit pas substantiellement la macroporosité de l'âme 1, cependant qu'elle ne supprime pas toute porosité des peaux 2, 3, en sorte que le panneau final ainsi obtenu conserve une certaine porosité.

Ce panneau est remarquable par ailleurs par le caractère quasi-isotrope de son comportement général, résultant à la fois d'un comportement quasi-isotrope des peaux dans leur plan et d'un comportement quasi-isotrope de l'âme 1 perpendiculairement aux peaux.

A titre d'exemple, il a été réalisé conformément à l'invention, un sandwich de 3, 7 cm d'épaisseur, constitué d'un nid d'abeille 1 de densité 0,064 avec des cellules de 4,8 mm et des peaux 2, 3 formées chacune de quatre plis d'un tissu d'armure satin de 4 et d'un grammage de 215 g/m². Lesdites peaux ont une épaisseur de 0,8 mm avec un taux volumique de fibre de 59 %, une porosité après pyrolyse de 26 % et un taux volumique de coke de 15 %.

La prise de poids de ce sandwich pendant l'infiltration en phase vapeur a montré que le volume occupé par le pyrocarbone dans le nid d'abeille est 1, 6 fois supérieur au volume libéré par la pyrolyse de la résine et par conséquent la présence des peaux ne gêne pas de manière sensible la densification du nid d'abeille ni la consolidation de la jonction adhésive. La densité finale du sandwich a été établie à 0,2.

Des essais mécaniques d'arrachement des peaux ont conduit à un arrachement à la liaison peau/âme sous une contrainte de 1,75 MPa, ce qui, ramené à la surface collée (surface de contact peau/âme), c'est à dire la tranche du nid d'abeille, donne une contrainte d'environ 20 MPa. Cette tenue mécanique est tout à fait comparable à celle des sandwichs carbone/résine de définition comparable.

Les remarquables propriétés de stabilité dimensionnelle et de tenue mécanique résultent tout particulièrement, et conformément au procédé de l'invention, de la conjonction de l'ensemble des étapes de pyrolyse en deux étapes, à savoir celle de l'âme 1, puis celle de l'assemblage âme + peaux + tissus de collage, de polymérisation avec compactage avant la seconde étape de pyrolyse et de densification finale par infiltration chimique en phase vapeur. Il est à noter en effet que si un seul traitement de pyrolyse était effectué, sur ledit assemblage, à partir d'une âme centrale non elle-même pyrolysée, il se produirait dans le sandwich des déformations, ainsi qu'un collage des peaux insuffisant, conséquences du retrait latéral que subirait l'âme centrale au cours de cette étape unique de pyrolyse. Un tel retrait fragilise le collage en provoquant des éclatements de la colle susceptibles d'entraîner un délaminage des peaux.

Le fait de pyrolyser l'âme centrale avant l'assemblage du sandwich rigidifie l'âme et les opérations ultérieures de polymérisation, pyrolyse et infiltration ne feront que renforcer la rigidité et la stabilité dimensionnelle de l'ensemble, laquelle est très supérieure à celle d'une structure composite carbone/résine.

En effet, comme on l'a rappelé plus haut, la présence de la résine induit, du fait de son aptitude à la reprise d'humidité, des risques, notamment en ambiance spatiale, d'évaporation de l'eau présente dans la résine, susceptibles d'entraîner des déformations de la structure. Au contraire, la structure tout carbone selon l'invention est totalement exempte de tels risques.

L'invention a également pour objet toute structure à paroi réalisée à l'aide d'un tel sandwich, notamment des structures susceptibles d'applications spatiales requérant à la fois une grande légèreté, une grande rigidité et une excellente stabilité dimensionnelle.

Il est à noter que de telles structures en ambiance spatiale ne sont pas de nature à polluer l'environnement par des relargages de gaz occlus, ce qui serait le cas de structure du type à matériau composite carbone/résine, toujours du fait de l'aptitude de la résine à la reprise d'humidité. Le relargage à l'extérieur de particules solides pourraient être un inconvénient majeur dans certaine applications telles que des structures supports de télescopes spatiaux d'observations scientifiques.

Il faut également souligner la porosité de la structure selon l'invention qui pourra permettre des échanges gazeux intérieur/extérieur dans certaines applications.

Pour des applications dans des ambiances à haute température, on pourra réaliser des structures résistant à l'oxydation en densifiant par du carbure de silicium les différents éléments du sandwich par une infiltration chimique en phase vapeur à l'aide d'un précurseur approprié, par exemple le trichlorométhylsilane, en sorte de revêtir les fibres de carbone et de colmater les microfissures desdites matrices par du carbure de silicium SiC.

L'invention n'est bien entendu pas limitée à la réalisation de structures destinées à des applications spatiales ou aéronautiques.

## Revendications

1. Procédé de fabrication d'un panneau du type nid d'abeille en composite carbone/carbone ou carbone/céramique, comprenant un support en nid d'abeille (1) ou analogue constitué d'un renfort de fibres de carbone densifié par une matrice en carbone ou céramique, flanqué de part et/ou d'autre d'une peau (2, 3) constituée d'un renfort en fibres de carbone densifié par une matrice en carbone ou céramique, **caractérisé en ce qu'**il consiste :
- à réaliser, d'une part, le support en nid d'abeille, par pyrolyse d'une structure nid d'abeille (1) en tissu de carbone pré-imprégné d'une résine thermodurcissable,
- à réaliser, d'autre part, la ou chaque peau (2, 3), par drapage de tissus de carbone pré-imprégnés d'une résine thermodurcissable,
- à assembler le support (1) et la ou les peaux (2, 3), en interposant entre peau et support un tissu (4) de carbone pré-imprégné d'une résine thermodurcissable,
- à polymériser avec compactage l'assemblage ainsi obtenu,
- puis à pyrolyser ledit assemblage,
- et, enfin, à effectuer une infiltration chimique en phase vapeur à des fins de densification et de renforcement du collage de l'assemblage..

2. Procédé suivant la revendication 1, **caractérisé en ce que** les cellules du support en nid d'abeille (1) sont formées à partir d'un tissu dont la chaîne et la trame sont orientées à 45° de l'axe des cellules.

3. Procédé suivant la revendication 1 ou 2, **caractérisé en ce que** la ou chaque peau (2, 3) est formée d'un empilement de plis croisés à 45° en respectant une symétrie miroir.

4. Procédé suivant l'une quelconque des revendications 1 à 3, **caractérisé en ce que** le tissu de carbone (4) interposé entre peau (2, 3) et support (1) en vue d'assurer le collage est imprégné de la même résine que le support nid d'abeille (1) mais avec un taux d'imprégnation plus élevé.

5. Procédé suivant l'une quelconque des revendications 1 à 4, **caractérisé en ce que** ledit tissu de carbone (4) est appliqué par pressage sur la peau (2, 3) avant mise en place de cette dernière sur ledit support (1).

6. Procédé suivant l'une quelconque des revendications 1 à 5, **caractérisé en ce que** la résine d'imprégnation des fibres de carbone du support (1), des peaux (2, 3) et du tissu de collage (4) est choisie dans le groupe comprenant les résines phénoliques, polyimides, furaniques et polycyanates.

7. Procédé suivant l'une quelconque des revendications 1 à 6, **caractérisé en ce que** les deux opérations de pyrolyse, d'une part, du support nid d'abeille (1) et, d'autre part, du sandwich assemblé, s'effectuent dans les conditions habituelles, à une température de l'ordre de 900°C.

8. Procédé suivant l'une quelconque des revendications 1 à 7, **caractérisé en ce que** la polymérisation des résines du sandwich assemblé s'effectue dans les conditions habituelles, à une température légèrement inférieure à 200°C et en associant une mise sous vide du sandwich à l'application d'une pression externe.

9. Procédé suivant l'une quelconque des revendications 1 à 8, **caractérisé en ce que** l'infiltration chimique en phase vapeur s'effectue à la manière connue, avec du méthane, vers 1000°C, sous une pression de 10³ Pa et pendant une dizaine de jours.

10. Procédé suivant l'une quelconque des revendications 1 à 8, **caractérisé en ce que** l'infiltration chimique en phase vapeur est effectuée avec un précurseur approprié, notamment du trichlorométhylsilane, en vue de réaliser une infiltration des matrices des éléments de l'assemblage en carbure de silicium.

11. Structure à paroi constituée d'un sandwich réalisé conformément au procédé de l'une quelconque des revendications 1 à 10.

## Patentansprüche

1. Verfahren zur Herstellung einer Platte vom Wabentyp aus einem Kohlenstoff/Kohlenstoff- oder Kohlenstoff/Keramik-Verbundwerkstoff, die einen wabenförmigen oder ähnlichen Träger (1) aufweist, der aus einer Kohlenstofffaser-Aussteifung gebildet ist, die durch ein Kohlenstoff- oder Keramik-Material verdichtet und auf einer Seite und/oder auf der anderen Seite von einer Haut (2, 3) flankiert ist, die aus einer durch ein Kohlenstoff- oder Keramik-Grundmaterial verdichteten Kohlenstofffaserversteifung gebildet ist, **dadurch gekennzeichnet, dass** es darin besteht:
- einerseits den wabenförmigen Träger durch Pyrolyse einer wabenförmigen Struktur (1) aus mit einem wärmehärtbaren Harz vorimprägniertem Kohlenstoffgewebe herzustellen,
- andererseits die oder jede Haut (2, 3) durch Drapieren von mit einem wärmehartbaren Harz vorimprägnierten Kohlenstoffgeweben herzustellen,
- den Träger (1) und die Haut oder die Häute (2, 3) unter Einfügung eines mit einem wärmehärtbaren Harz vorimprägnierten Kohlenstoffgewebes (4) zwischen die Haut und den Träger zusammenzufügen,
- den somit erhaltenen Verbund unter Verpressung zu polymerisieren,
- dann den Verbund zu pyrolysieren,
- und schließlich eine chemische Tränkung in der Dampfphase vorzunehmen, um die Klebung des Verbundes zu verdichten und zu versteifen.

2. Verfahren nach Anspruch 1, **dadurch gekennzeichnet, dass** die Zellen des wabenförmigen Trägers (1) aus einem Gewebe gebildet werden, dessen Kette und dessen Schuss unter 45° zu der Achse der Zellen orientiert sind.

3. Verfahren nach Anspruch 1 oder 2, **dadurch gekennzeichnet, dass** die oder jede Haut (2, 3) aus einem Stapel von unter 45° gekreuzten Lagen unter Berücksichtigung einer Spiegelsymmetrie gebildet sind.

4. Verfahren nach einem der Ansprüche 1 bis 3, **dadurch gekennzeichnet, dass** das Kohlenstoffgewebe (4), das zwischen die Haut (2, 3) und den Träger (1) eingefügt ist, um die Klebung sicherzustellen, mit demselben Harz wie der wabenförmige Träger (1 ), jedoch mit einem höheren Imprägnierungsanteil imprägniert wird.

5. Verfahren nach einem der Ansprüche 1 bis 4, **dadurch gekennzeichnet, dass** das Kohlenstoffgewebe (4) durch Pressen auf die Haut (2, 3) aufgebracht wird, bevor diese letztere auf dem Träger (1) angeordnet wird.

6. Verfahren nach einem der Ansprüche 1 bis 5, **dadurch gekennzeichnet, dass** das Imprägnierharz der Kohlenstofffasern des Trägers (1), der Häute (2, 3) und des Ktebegewebes (4) aus der Gruppe gewählt ist, die Phenol-, Polyimid-, Furan- und Polycyanat-Harze enthält.

7. Verfahren nach einem der Ansprüche 1 bis 6, **dadurch gekennzeichnet, dass** die zwei Pyrolysevorgänge, einerseits des wabenförmigen Körpers (1) und andererseits des Sandwichverbundes, unter üblichen Bedingungen bei einer Temperatur in der Größenordnung von 900 °C ausgeführt werden.

8. Verfahren nach einem der Ansprüche 1 bis 7, **dadurch gekennzeichnet, dass** die Polymerisation der Harze des Sandwichverbundes unter üblichen Bedingungen bei einer Temperatur, die etwas unterhalb von 200 °C liegt, und unter Einbringung des Sandwichverbundes in ein Vakuum während der Ausübung eines äußeren Drucks erfolgt.

9. Verfahren nach einem der Ansprüche 1 bis 8, **dadurch gekennzeichnet, dass** die chemische Tränkung in der Dampfphase in bekannter Weise mit Methan bei etwa 1000 °C unter einem Druck von 10³ Pa und während etwa zehn Tagen erfolgt.

10. Verfahren nach einem der Ansprüche 1 bis 8, **dadurch gekennzeichnet, dass** die chemische Tränkung in der Dampfphase mit einem geeigneten Zwischenstoff, insbesondere Trichlormethylsilan, ausgeführt wird, um eine Tränkung der Grundmaterialien der Elemente des Verbundes mit Siliciumkohlenstoff vorzunehmen.

11. Wandstruktur, die aus einem Sandwichverbund gebildet ist, der gemäß dem Verfahren nach einem der Ansprüche 1 bis 10 hergestellt ist.

## Claims

1. A method of manufacturing a panel of the honeycomb type made from carbon/carbon or carbon/ceramic composite, comprising a honeycomb support (1) or the like formed of a reinforcement of carbon fibres with its density increased by a matrix of carbon or ceramic, flanked on one or both sides by a skin (2, 3) formed of a reinforcement of carbon fibres made denser by a matrix of carbon or ceramic, **characterised in that** it comprises:
- firstly producing the honeycomb support, by pyrolysis of a honeycomb structure (1) made from a carbon fabric preimpregnated with a thermosetting resin,
- secondly producing the skin or skins (2, 3), by stretch forming carbon fabrics preimpregnated with a thermosetting resin,
- assembling the support (1) and the skin or skins (2, 3), interposing between skin and support a carbon fabric (4) preimpregnated with a thermosetting resin,
- polymerising, with compacting, the assembly thus obtained,
- then pyrolysing said assembly,
- and, finally, carrying out a chemical vapour infiltration for the purpose of making the adhesive bonding of the assembly more dense and reinforcing it.

2. A method according to claim 1, **characterised in that** the cells of the honeycomb support (1) are formed from a fabric whose warp and weft are oriented at 45° to the axis of the cells.

3. A method according to claim 1 or 2, **characterised in that** the skin or skins (2, 3) are formed from a stack of plies crossed at 45° following a mirror symmetry.

4. A method according to any one of claims 1 to 3, **characterised in that** the carbon fabric (4) interposed between skin (2, 3) and support (1) with a view to providing the adhesive bonding is impregnated with the same resin as the honeycomb support (1) but with a higher degree of impregnation.

5. A method according to any one of claims 1 to 4, **characterised in that** said carbon fabric (4) is applied by pressing against the skin (2, 3) before the latter is placed on said support (1).

6. A method according to any one of claims 1 to 5, **characterised in that** the resin impregnating the carbon fibres of the support (1), the skins (2, 3) and the bonding fabric (4) is chosen from the group comprising phenolic, polyimide, furan and polycyanate resins.

7. A method according to any one of claims 1 to 6, **characterised in that** the two operations of pyrolysis firstly of the honeycomb support (1) and secondly of the assembled sandwich are performed under normal conditions, at a temperature of around 900°C.

8. A method according to any one of claims 1 to 7, **characterised in that** the polymerisation of the resins of the assembled sandwich is performed under normal conditions, at a temperature slightly less than 200°C and by combining putting the sandwich under vacuum with applying an external pressure.

9. A method according to any one of claims 1 to 8, **characterised in that** the chemical vapour infiltration is performed in a known manner, with methane, at around 1000°C, at a pressure of 10³ Pa and for around ten days.

10. A method according to any one of claims 1 to 8, **characterised in that** the chemical vapour infiltration is performed with a suitable precursor, in particular trichloromethylsilane, with a view to effecting an infiltration of the matrices of the elements of the silicon carbide assembly.

11. A wall structure consisting of a sandwich produced in accordance with the method of any one of claims 1 to 10.
